# EUROPÄISCHE PATENTSCHRIFT

(11) **EP 2 454 979 B1**
(45) Veröffentlichungstag und Bekanntmachung des Hinweises auf die Patenterteilung: **15.07.2015**
(21) Anmeldenummer: 11450140.6
(22) Anmeldetag: 11.11.2011
(51) Int. Cl.: A47J 42/04, A47J 42/50

(54) **Behälter zur Aufnahme von Gewürzen**
Container for holding spices
Récipient destiné à la réception d'épices

(30) Priorität: 18.11.2010 AT 19042010
(43) Veröffentlichungstag der Anmeldung: 23.05.2012
(73) Patentinhaber: Joma Kunststofftechnik GmbH & Co. KG, 2345 Brunn am Gebirge (AT)
(72) Erfinder: Petri, Ovidiu, 2362 Biedermannsdorf (AT)
(74) Vertreter: Sonn & Partner Patentanwälte

(56) Entgegenhaltungen:
- EP-A1- 1 989 979
- EP-A1- 2 225 980
- WO-A1-2005/046411

## Beschreibung

Die Erfindung bezieht sich auf einen Behälter, insbesondere Flasche, zur Aufnahme von Gewürzen und zum Aufsetzen eines Mahlwerkes auf den Behälterhals, wobei das Mahlwerk einen mit Zähnen versehenen Stator aufweist, in dem ein mit Zähnen versehener Rotor gelagert ist, der über eine fest mit ihm verbundene Kappe drehbar und begrenzt axial verschiebbar ist.

Aus der EP 1 696 775 B1 ist ein derartiger Behälter samt Mahlwerk bekannt, wobei das Mahlwerk auf dem Behälterhals durch Verschraubung befestigt ist. Die Begrenzung der axialen Verschiebung erfolgt durch zwei am Rotor vorgesehene Nuten, die mit einer am Stator vorgesehenen Rippe zusammenwirken.

Nachteilig bei dieser Anordnung ist sowohl die Verschraubung des Mahlwerkes am Behälterhals als auch die Anordnung der beiden nahe beieinander liegenden Nuten am Rotor. Durch die Verschraubung kann sich das Mahlwerk relativ leicht vom Behälter lösen, und die Anordnung von zwei Nuten nahe beieinander ist insbesondere bei Kunststoffteilen verhältnismäßig schwierig und aufwendig.

Die Erfindung hat es sich zum Ziel gesetzt, die Nachteile des bekannten Behälters zu vermeiden und erreicht dies dadurch, dass der Behälter am Behälterhals zwei im Abstand verlaufende Rippen aufweist, die eine Rille begrenzen, deren Breite der Länge des axialen Verschiebeweges des Rotors entspricht.

Bei einer erfindungsgemäßen Anordnung erfolgt die Begrenzung des axialen Verschiebeweges des Rotors durch Rippen am Behälterhals, die mit Vorsprüngen am Mahlwerk zusammenwirken. Dies ist leichter herzustellen als die beiden nahe beieinander liegenden Nuten am Rotor der bekannten Anordnung.

Zur Befestigung des Stators am Behälter ist am Behälterhals nahe seinem oberen Ende eine weitere umfänglich verlaufende Rippe angeordnet. Dadurch wird ein Lösen des Mahlwerkes vom Behälter, wie beim bekannten Mahlwerk möglich, verhindert. Zweckmäßig weist die Rippe zur Befestigung des Stators einen kleineren Durchmesser als die Rippen, welche die Rille begrenzen, auf.

Zur Verdrehsicherung des Stators sind zweckmäßig am Behälterhals Vorsprünge angeordnet.

Nachstehend ist die Erfindung anhand eines in den Zeichnungen dargestellten Ausführungsbeispieles näher beschrieben.

Dabei zeigt:
Fig. 1 den Behälterhals mit aufgesetztem Mahlwerk im Schnitt in der Stellung zum Feinmahlen;
Fig. 2 in einer der Fig. 1 entsprechenden Darstellung das Mahlwerk in der Stellung zum Grobmahlen;
Fig. 3 den Behälterhals in Seitenansicht.

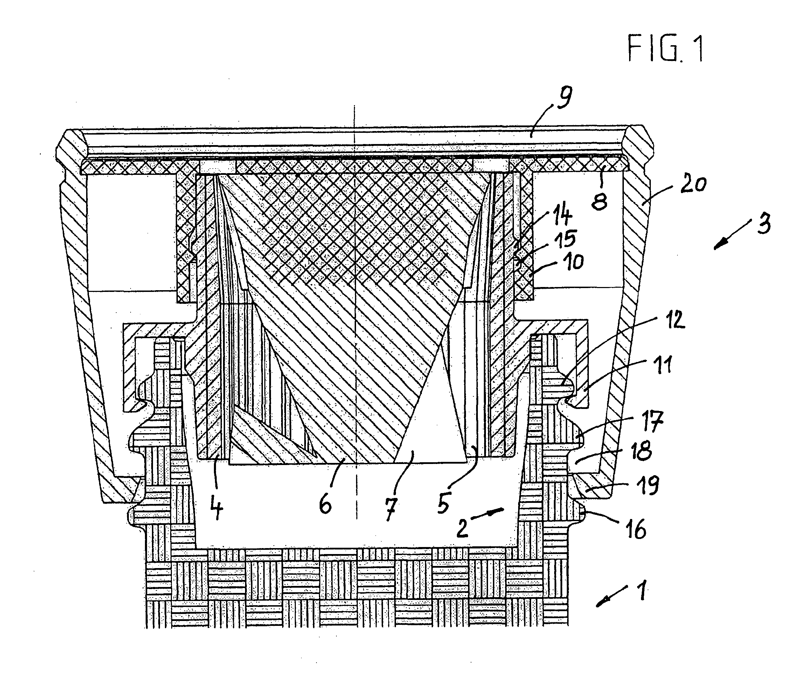

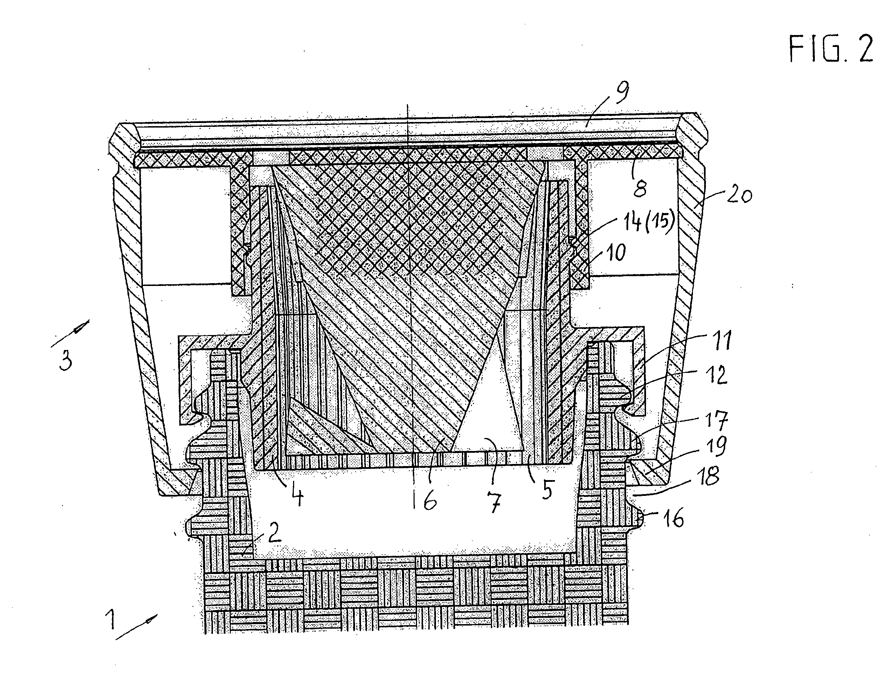

Gemäß den Fig. 1 und 2 ist auf dem Behälterhals 2 eines Behälters 1, insbesondere einer Flasche, ein Mahlwerk 3 aufgesetzt. Das Mahlwerk 3 besteht aus einem Stator 4 mit nach innen ragenden Zähnen 5 und einem im Stator 4 gelagerten Rotor 6 mit Zähnen 7, die mit den Zähnen 5 des Stators 4 zum Mahlen eines im Behälter 1 enthaltenen Gewürzes zusammenwirken.

Der Rotor 6 ist mit einem Innenteil 8 und dieser mit einer Kappe 9 fest verbunden. Der mit der Kappe 9 verbundene Innenteil 8 weist einen den Rotor 6 mindestens teilweise umgebenden Ring 10 auf.

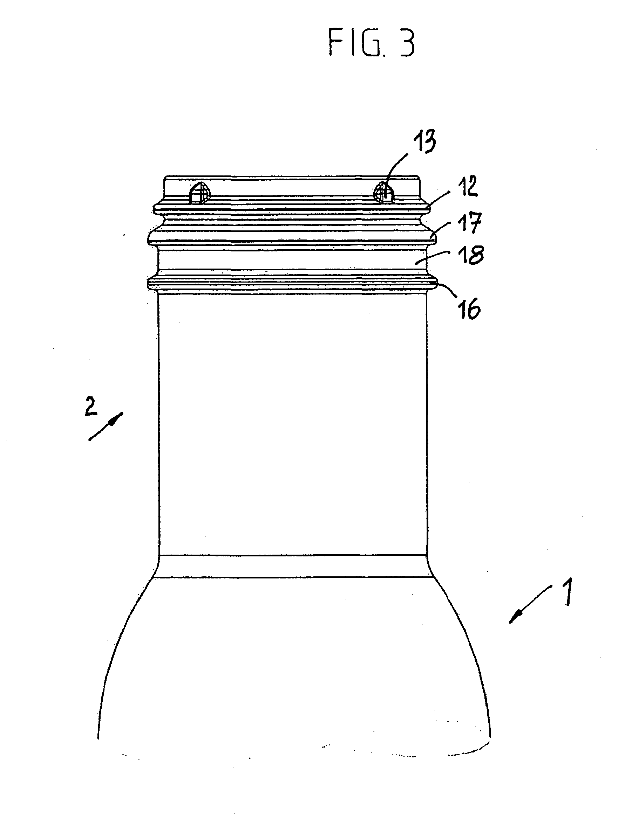

Der Stator 4 besitzt nach innen federnde Krallen 11, die eine am Behälterhals 2 nahe seinem oberen Ende umfänglich verlaufende Rippe 12 umgreifen, wodurch der Stator 4 fest am Behälterhals 2 befestigt ist. Zur Verdrehsicherung des Stators 4 sind am Behälterhals 2, wie aus Fig. 3 ersichtlich ist, Vorsprünge 13 angeordnet.

Der Rotor 6 weist eine an seinem Umfang angeordnete Rippe 14 auf, die mit einer innen am Ring 10 umfänglich verlaufenden Nut 15 zusammenwirkt.

Der Behälterhals 2 besitzt an seinem Außenumfang zwei umfänglich verlaufende Rippen 16 und 17, die eine Rille 18 begrenzen. In diese Rille 18 greifen Ansätze 19 ein, welche am Umfangsteil 20 der Kappe 9 angeordnet sind.

Diese Ansätze 19 begrenzen daher, insbesondere durch die Rippe 17, eine axiale Bewegung der Kappe 9 und damit des Rotors 6.

Demgemäß ist bei der in Fig. 1 dargestellten Lage des Rotors 6 ein größerer Mahlspalt zwischen dem Stator 4 und dem Rotor 6 vorhanden. Im Gegensatz dazu ist bei der in Fig. 2 dargestellten Stellung, in der die Rippe 14 in die Nut 15 eingreift, der Mahlspalt zwischen dem Stator 4 und dem Rotor 6 kleiner.

Wie ersichtlich, ist zur Befestigung des Mahlwerkes 3 am Behälter keine Verschraubung erforderlich. Die Begrenzung der axialen Verschiebebewegung erfolgt durch die beiden Rippen 16 und 17, wobei insbesondere die Rippe 17 wesentlich ist, weil sie ein Ausziehen des Rotors aus dem Stator verhindert.

Im Rahmen der Erfindung sind zahlreiche Abänderungen möglich. So könnte z.B. der Innenteil 8 mit seinem Ring 10 einstückig mit der Kappe 20 ausgebildet sein.

## Patentansprüche

1. Behälter, insbesondere Flasche, zur Aufnahme von Gewürzen, mit einem Mahlwerk (3) zum Aufsetzen auf den Behälterhals (2), wobei das Mahlwerk (3) einen mit Zähnen (5) versehenen Stator (4) aufweist, in dem ein mit Zähnen (7) versehener Rotor (6) gelagert ist, der über eine fest mit ihm verbundene Kappe (9) drehbar und begrenzt axial verschiebbar ist, **dadurch gekennzeichnet, dass** der Behälter (1) am Behälterhals (2) zwei im Abstand verlaufende Rippen (16, 17) aufweist, die eine Rille (18) begrenzen, deren Breite der Länge des axialen Verschiebeweges des Rotors (6) entspricht.

2. Behälter nach Anspruch 1, **dadurch gekennzeichnet, dass** am Behälterhals (2) nahe seinem oberen Ende eine weitere umfänglich verlaufende Rippe (12) zur Befestigung des Stators (4) angeordnet ist.

3. Behälter nach Anspruch 2, **dadurch gekennzeichnet, dass** die Rippe (12) zur Befestigung des Stators (4) einen kleineren Durchmesser als die Rippen (16, 17), welche die Rille (18) begrenzen, aufweist.

4. Behälter nach einem der Ansprüche 1 bis 3, **dadurch gekennzeichnet, dass** am Behälterhals (2) Vorsprünge (13) zur Verdrehsicherung des Stators (4) angeordnet sind.

## Claims

1. A container, in particular a bottle, for holding spices, having a grinder (3) to be placed onto the container neck (2), wherein the grinder (3) has a stator (4) provided with teeth (5), in which a rotor (6) provided with teeth (7) is supported, which can be rotated and axially displaced to a limited extent by means of a cap (9) firmly connected to it, **characterised in that** the container (1) has two ribs (16, 17) extending on the container neck (2) spaced apart from one another, delimiting a groove (18) the width of which matches the length of the axial displacement path of the rotor (6).

2. The container according to claim 1, **characterised in that** a further circumferentially extending rib (12) for attaching the stator (4) is arranged on the container neck (2) near its upper end.

3. The container according to claim 2, **characterised in that** the rib (12) for attaching the stator (4) has a smaller diameter than the ribs (16, 17) delimiting the groove (18).

4. The container according to any one of claims 1 to 3, **characterised in that** protrusions (13) for an anti-twist protection of the stator (4) are arranged on the container neck (2).

## Revendications

1. Récipient, en particulier bouteille, pour recevoir des épices, comprenant un broyeur (3) à mettre en place sur le goulot (2) du récipient, le broyeur (3) présentant un stator (4) muni de dents (5) dans lequel est logé un rotor muni de dents (7), lequel rotor est mobile en rotation et mobile à coulissement (6) de manière axialement délimitée par l'intermédiaire d'un capuchon (9) relié fixement à lui, **caractérisé en ce que** le récipient (1) présente sur son goulot (2) deux nervures (16, 17) s'étendant à distance, lesquelles délimitent une gorge (18) dont la largeur correspond à la longueur de mouvement axial du rotor (6).

2. Récipient selon la revendication 1, **caractérisé en ce qu'**une autre nervure (12) périphérique est disposée sur le goulot (2) du récipient, à proximité de son extrémité supérieure, pour la fixation du stator (4).

3. Récipient selon la revendication 2, **caractérisé en ce que** la nervure (12) pour la fixation du stator (4) présente un diamètre plus petit que les nervures (16, 17) qui délimitent la gorge (18).

4. Récipient selon l'une des revendications 1 à 3, **caractérisé en ce que** des saillies (13) sont disposées sur le goulot (2) du récipient pour bloquer le stator (4) en rotation.
